# EUROPEAN PATENT APPLICATION

(11) **EP 2 015 525 A2**
(43) Date of publication of application: **14.01.2009**
(21) Application number: 08010274.2
(22) Date of filing: 05.06.2008
(51) Int. Cl.: H04L 12/56

(54) **Data transmitting apparatus, data transmitting method and recording medium including data transmission program**

(30) Priority: 07.06.2007 JP 2007151901
(71) Applicant: NEC Corporation, Minato-ku Tokyo (JP)
(72) Inventor: Yoshimura, Mikihiro, Tokyo (JP)
(74) Representative: Merkau, Bernhard

(57) **Abstract**

The present invention provides a data transmitting apparatus capable of switching a plurality of switches and performing different data transmission processes to effectively transmit data.

According to an exemplary aspect of the invention, a data transmitting apparatus 1 includes a plurality of switches 100-1 to 100-n (n is an arbitrary integer) that perform different data transmission processes, and uses the switches 100-1 to 100-n to transmit data. The data transmitting apparatus 1 is connected to interfaces 200-1 to 200-n including physical lines accommodated therein. The data transmitting apparatus 1 switches any one of the switches 100-1 to 100-n used for data transmission according to the type of physical lines in the interfaces 200-1 to 200-n.

## Description

This application is based upon and claims the benefit of priority from Japanese patent application No. 2007-151901, filed on June 7, 2007, the disclosure of which is incorporated herein in its entirety by reference.

### BACKGROUND OF THE INVENTION

### Field of the Invention

The present invention relates to a data transmitting apparatus, a data transmitting method, and a recording medium including a data transmission program, and more particularly, to a data transmitting apparatus, a data transmitting method, and a recording medium including a data transmission program including a plurality of switches and performing different data transmission processes to transmit data by using the plurality of switches.

### Description of the Related Art

In recent years, in an access network connecting a base transceiver station (BTS), which is a 2G or 3G wireless base station, and a base station controller (BSC)/radio network controller (RNC), which is a base station control apparatus, that is, a so-called mobile backhaul, an All-IP network has been developed in order to effectively construct and operate a network. Therefore, solutions for the migration of the existing network to the IP network while saving the network are needed.

In a transition period of the migration of the existing network to the IP network, it is necessary to transmit both TDM (time division multiple) data and packet data. Therefore, in order to effectively use equipment, a data transmitting apparatus capable of effectively accommodating and exchanging the both data is needed.

Therefore, it is necessary to develop a control method capable of switching a plurality of switches that performs different data transmission processes to effectively transmit data.

A general data transmitting apparatus converts TDM data into packet data, and vice versa, to transmit the converted data.

However, for example, in a mode that converts TDM data into packet data and transmits the packet data using a packet switch, a delay or a variation occurs in converting.

Therefore, a receiver that receives the packet data needs to be provided with a packet buffer in order to correct the delay or the variation.

Further, when TDM data is converted into packet data, a large overhead occurs, which is inefficient. In addition, in this case, since the packets are to be asynchronous, problems arise in the transmission of a synchronization clock.

Furthermore, in a mode that converts packet data into TDM data and transmits the converted data using a TDM switch, a TDM bandwidth is to be consumed even when data transmission is not performed.

As an example of the related art, a line interface apparatus has been proposed which determines a type of a line connected thereto and is automatically connected to an interface corresponding to the connected line (for example, see Japanese Patent Application Laid-Open No. H11-69391).

Further, a node apparatus has been proposed which performs both packet-based communication and TDM-based communication over one network (for example, see Japanese Patent Application Laid-Open No. 2003-259471).

The line interface apparatus disclosed in Japanese Patent Application Laid-Open No. H11-69391 determines the type of line connected thereto on the basis of signals obtained from the connected line and is automatically connected to an interface corresponding to the connected line.

Therefore, Japanese Patent Application Laid-Open No. H11-69391 does not disclose any technique for selecting a switch used for data transmission in the data transmitting apparatus that is connected to interfaces including physical lines accommodated therein according to the type of physical lines in the interfaces and necessities for the technique.

In addition, Japanese Patent Application Laid-Open No. H11-69391 does not disclose any technique for selecting a switch used for data transmission in the data transmitting apparatus that is connected to interfaces including physical lines accommodated therein, in the units of physical lines in the interfaces, and necessities for the technique.

Further, in Japanese Patent Application Laid-Open No. 2003-259471, an interface circuit includes the structure that performs both packet-based communication and TDM-based communication. Therefore, in the technique disclosed in Japanese Patent Application Laid-Open No. 2003-259471, the internal structure of the interface circuit becomes complicated.

In addition, in Japanese Patent Application Laid-Open No. 2003-259471, the switching control between the packet-based communication and the TDM-based communication is performed in response to instructions from an operator or according to the analysis result of traffic condition information.

Therefore, Japanese Patent Application Laid-Open No. 2003-259471 does not disclose any technique for selecting a switch used for data transmission in the data transmitting apparatus that is connected to interfaces including physical lines accommodated therein according to the type of physical lines in the interfaces and necessities for the technique.

In addition, Japanese Patent Application Laid-Open No. 2003-259471 does not disclose any technique for selecting a switch used for data transmission in the data transmitting apparatus that is connected to interfaces including physical lines accommodated therein, in the units of physical lines in the interfaces, and necessities for the technique.

### SUMMARY

The invention has been made to solve the above problems, and an exemplary object of the invention is to provide a data transmitting apparatus, a data transmitting method, and a recording medium including a data transmission program capable of switching a plurality of switches and performing different data transmission processes to effectively transmit data.

### <Data transmitting apparatus>

According to an exemplary aspect of the invention, a data transmitting apparatus includes: a plurality of switches that perform different data transmission processes; and a switching unit. The data transmitting apparatus uses the switches to transmit data and is connected to interfaces including physical lines accommodated therein, and the switching unit switches any one of the switches used for data transmission according to the type of physical lines in the interfaces.

According to another exemplary aspect of the invention, a data transmitting apparatus includes: a plurality of switches that perform different data transmission processes; and a switching unit. The data transmitting apparatus uses the switches to transmit data and is connected to interfaces including physical lines accommodated therein, and the switching unit switches any one of the switches used for data transmission in the units of physical lines.

### <Data transmitting method>

According to an exemplary aspect of the invention, there is provided a data transmitting method that is performed by a data transmitting apparatus using a plurality of switches that perform different data transmission processes to transmit data, the data transmitting apparatus being connected to interfaces including physical lines accommodated therein. The method includes allowing the data transmitting apparatus to switch any one of the switches used for data transmission according to the type of physical lines in the interfaces.

According to another exemplary aspect of the invention, there is provided a data transmitting method that is performed by a data transmitting apparatus using a plurality of switches that perform different data transmission processes to transmit data, the data transmitting apparatus being connected to interfaces including physical lines accommodated therein. The method includes allowing the data transmitting apparatus to switch any one of the switches used for data transmission in the units of physical lines.

### <Recording medium including data transmission program>

According to exemplary an exemplary aspect of the invention, there is provided a recording medium including a data transmission program that allows a data transmitting apparatus using a plurality of switches that perform different data transmission processes to transmit data, the data transmitting apparatus being connected to interfaces including physical lines accommodated therein, to execute a process of switching any one of the switches used for data transmission according to the type of physical lines in the interfaces.

According to another exemplary aspect of the invention, there is provided a recording medium including a data transmission program that allows a data transmitting apparatus using a plurality of switches that perform different data transmission processes to transmit data, the data transmitting apparatus being connected to interfaces including physical lines accommodated therein, to execute a process of switching any one of the switches used for data transmission in the units of physical lines.

### BRIEF DESCRIPTION OF THE DRAWINGS

Fig. 1 is a diagram illustrating the structure of a data transmitting apparatus 1 according to exemplary embodiments of the invention;
Fig. 2 is a diagram illustrating the structure of a data transmitting apparatus 1 according to a first exemplary embodiment of the invention;
Fig. 3 is a flowchart illustrating a series of control processes performed by the data transmitting apparatus 1 according to the first exemplary embodiment of the invention;
Fig. 4 is a diagram illustrating the structure of a data transmitting apparatus 1 according to a second exemplary embodiment of the invention; and
Fig. 5 is a flowchart illustrating a series of control processes performed by the data transmitting apparatus 1 according to the second exemplary embodiment of the invention.

### EXEMPLARY EMBODIMENTS

### <Outline of data transmitting apparatus according to exemplary embodiments>

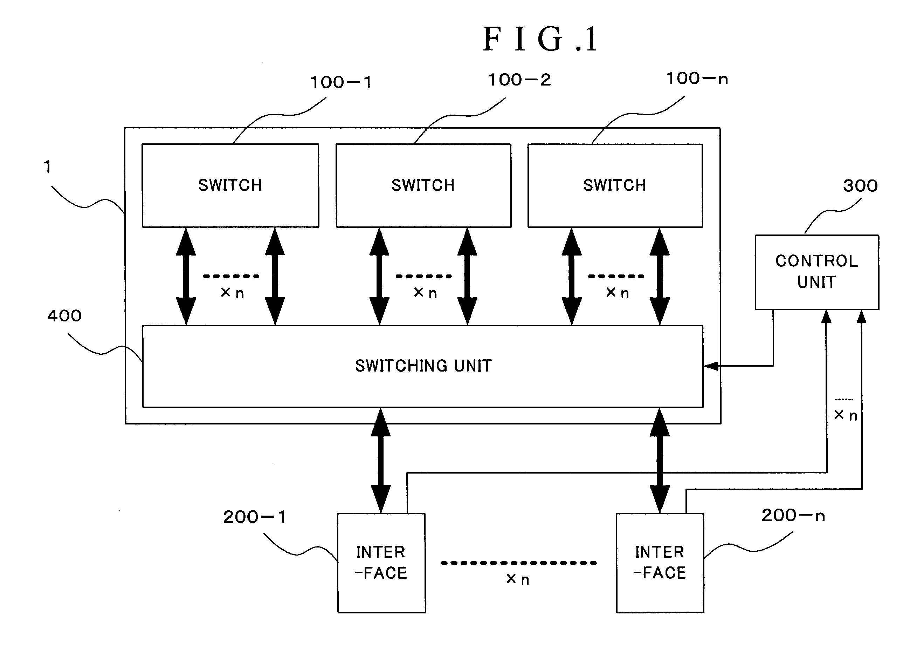

First, the outline of a data transmitting apparatus 1 according to exemplary embodiments of the invention will be described with reference to Fig. 1.

The data transmitting apparatus 1 according to the exemplary embodiments includes a plurality of switches 100-1 to 100-n (n is an arbitrary integer) that perform different data transmission processes, and uses the switches 100-1 to 100-n to perform data transmission. The data transmitting apparatus 1 is connected to interfaces 200-1 to 200-n (n is an arbitrary integer) that accommodate physical lines therein.

The data transmitting apparatus 1 according to the exemplary embodiments is characterized in that any one of the switches 100-1 to 100-n used to transmit data are switched according to the type of physical lines in the interfaces 200-1 to 200-n.

Further, the data transmitting apparatus 1 according to the exemplary embodiments is characterized in that any one of the switches 100-1 to 100-n used to transmit data are switched in the units of physical lines in the interfaces 200-1 to 200-n.

Specifically, a control unit 300 acquires the type of physical lines in the interfaces 200-1 to 200-n, and specifies the acquired type of physical lines. A switching unit 400 switches any one of the switches 100-1 to 100-n according to the type of physical lines specified by the control unit 300.

In this way, the data transmitting apparatus 1 according to the exemplary embodiments switches the plurality of switches 100-1 to 100-n that perform different data transmission processes, thereby transmitting data. Hereinafter, the data transmitting apparatus 1 according to the exemplary embodiments of the invention will be described in detail with reference to the accompanying drawings.

### (First exemplary embodiment)

### <Structure of data transmitting apparatus 1>

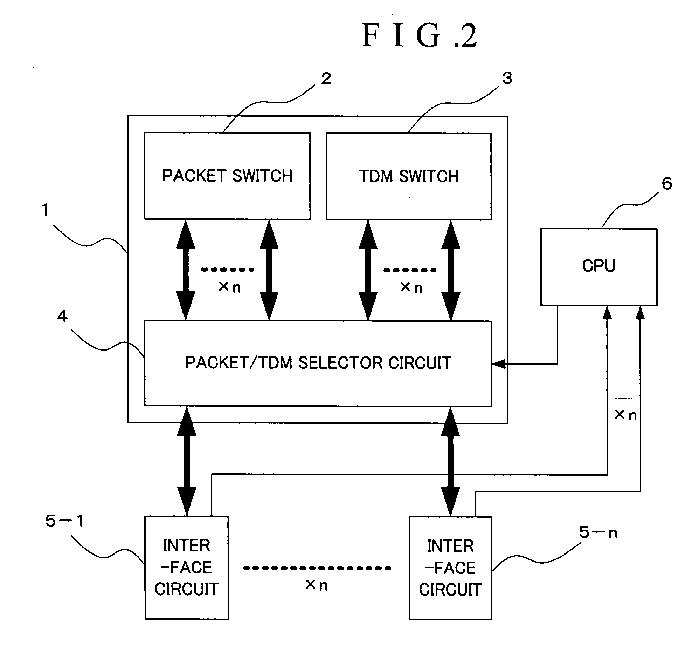

First, the structure of a data transmitting apparatus 1 according to a first exemplary embodiment of the invention will be described with reference to Fig. 2.

The data transmitting apparatus 1 according to this exemplary embodiment is for transmitting data input from interface circuits 5-1 to 5-n (n is an arbitrary integer).

Further, as shown in Fig. 2, the data transmitting apparatus 1 is connected to the interface circuits 5-1 to 5-n and a CPU 6.

The data transmitting apparatus 1 includes a packet switch 2, a TDM switch 3, and a packet/TDM selector circuit 4.

The packet switch 2 is for transmitting packet data. The packet switch 2 according to this exemplary embodiment is connected to the packet/TDM selector circuit 4.

The TDM switch 3 is for transmitting TDM data. The TDM switch 3 according to this exemplary embodiment is connected to the packet/TDM selector circuit 4.

The packet/TDM selector circuit 4 is for performing switching between the packet switch 2 and the TDM switch 3 in response to instructions from the CPU 6.

The packet/TDM selector circuit 4 transmits packet data input from the interface circuits 5-1 to 5-n to the packet switch 2 without any change, or TDM data input from the interface circuits 5-1 to 5-n to the TDM switch 3 without any change.

The packet/TDM selector circuit 4 transmits packet data received from the packet switch 2 to the interface circuits 5-1 to 5-n without any change, or TDM data received from the TDM switch 3 to the interface circuits 5-1 to 5-n.

In addition, the packet/TDM selector circuit 4 according to this exemplary embodiment is connected to the packet switch 2, the TDM switch 3, the interface circuits 5-1 to 5-n, and the CPU 6.

The interface circuits 5-1 to 5-n are interface circuits in the units of physical lines. The interface circuits 5-1 to 5-n according to this exemplary embodiment store physical line type information therein. The physical line type information is for specifying the type of physical lines in the interface circuits. For example, the type of the physical lines includes an Ether line and a TDM line.

Further, the interface circuits 5-1 to 5-n according to this exemplary embodiment are connected to the packet/TDM selector circuit 4 and the CPU 6.

The CPU 6 reads the physical line type information from the interface circuits 5-1 to 5-n, and specifies the type of physical lines in the interface circuits 5-1 to 5-n on the basis of the physical line type information. The CPU 6 performs switching between selector circuits of the packet/TDM selector circuit 4 according to the type of physical lines.

For example, when the physical line type information read from the interface circuits 5-1 to 5-n indicates an Ether line, the CPU 6 sets the packet/TDM selector circuit 4 such that the packet/TDM selector circuit 4 is connected to the packet switch 2.

When the physical line type information read from the interface circuits 5-1 to 5-n indicates a TDM line, the CPU 6 sets the packet/TDM selector circuit 4 such that the packet/TDM selector circuit 4 is connected to the TDM switch 3.

The process of the CPU 6 may be executed by incorporated software. The CPU 6 according to this exemplary embodiment is connected to the packet/TDM selector circuit 4 and the interface circuits 5-1 to 5-n.

### <Processing operation>

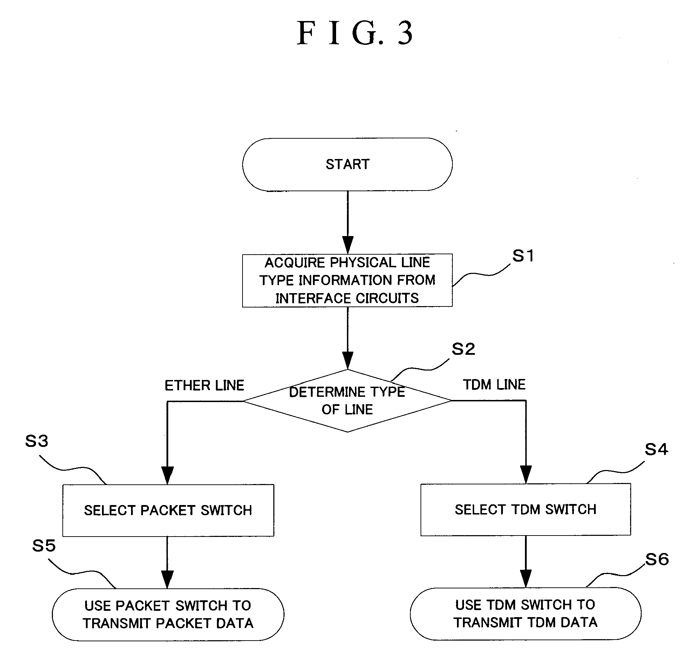

Next, the processing operation of the data transmitting apparatus 1 according to this exemplary embodiment will be described with reference to Fig. 3.

First, the CPU 6 acquires physical line type information from the interface circuits 5-1 to 5-n (Step S1), and determines the type of lines in the interface circuits 5-1 to 5-n on the basis of the acquired physical line type information (Step S2).

If it is determined that the physical line type information indicates an Ether line, the CPU 6 sets the packet/TDM selector circuit 4 such that the packet/TDM selector circuit 4 is connected to the packet switch 2 (Step S3).

In this way, when packet data is input from the interface circuits 5-1 to 5-n, the packet/TDM selector circuit 4 transmits the packet data to the packet switch 2 without any change (Step S5).

If it is determined that the physical line type information indicates a TDM line, the CPU 6 sets the packet/TDM selector circuit 4 such that the packet/TDM selector circuit 4 is connected to the TDM switch 3 (Step S4).

In this way, when TDM data is input from the interface circuits 5-1 to 5-n, the packet/TDM selector circuit 4 transmits the TDM data to the TDM switch 3 without any change (Step S6).

The process shown in Fig. 3 is performed in the units of physical lines.

As described above, the data transmitting apparatus 1 according to this exemplary embodiment includes a plurality of switches 2 and 3, that is, the packet switch 2 and the TDM switch 3 that perform different data transmission processes. In addition, the data transmitting apparatus 1 is connected to the interface circuits 5-1 to 5-n including the physical lines accommodated therein.

Further, the data transmitting apparatus 1 according to this exemplary embodiment performs switching between the switches 2 and 3 used for data transmission according to the type of physical lines in the interface circuits 5-1 to 5-n. The data transmitting apparatus 1 transmits data input from the interface circuits 5-1 to 5-n to the switch 2 or 3 without any change, and outputs data transmitted from the switch 2 or 3 to the interface circuits 5-1 to 5-n without any change.

When the type of physical line is an Ether line, the data transmitting apparatus 1 according to this exemplary embodiment selects the packet switch 2 in order to transmit data. Then, the data transmitting apparatus 1 transmits the packet data input from the interface circuits 5-1 to 5-n to the packet switch 2 without any change, and outputs the packet data transmitted from the packet switch 2 to the interface circuits 5-1 to 5-n without any change.

When the type of physical line is a TDM line, the data transmitting apparatus 1 according to this exemplary embodiment selects the TDM switch 3 in order to transmit data. Then, the data transmitting apparatus 1 transmits the TDM data input from the interface circuits 5-1 to 5-n to the TDM switch 3 without any change, and outputs the TDM data transmitted from the TDM switch 3 to the interface circuits 5-1 to 5-n without any change.

Therefore, the data transmitting apparatus 1 according to this exemplary embodiment includes the packet switch 2 that is capable of sharing a band and the TDM switch 3 that has little delay and guarantees the band, and can perform two different processes. Therefore, it is not necessary to convert TDM data into packet data, and it is possible to prevent a delay or a variation. As a result, the data transmitting apparatus does not need to be provided with a packet buffer for correcting the delay or the variation, and thus it is possible to reduce manufacturing costs.

Further, since the interface circuits 5-1 to 5-n process only one of the packet data and the TDM data, it is possible to simplify the internal structure of the interface circuits 5-1 to 5-n.

In addition, since the data transmitting apparatus 1 according to this exemplary embodiment does not need to convert TDM data into packet data, it is possible to prevent the occurrence of overhead. Further, it is possible to easily transmit a synchronization clock.

Further, the data transmitting apparatus 1 according to this exemplary embodiment does not need to transmit packet data in a TDM scheme, it is possible to prevent the consumption of a TDM band when packet data is not transmitted.

Therefore, the data transmitting apparatus 1 according to this exemplary embodiment can effectively transmit packet traffic data and TDM traffic data.

Furthermore, since the data transmitting apparatus 1 according to this exemplary embodiment switches the packet/TDM selector circuit 4 in the units of physical lines, it is possible to easily perform the switching of the packet/TDM selector circuit 4.

Further, since the data transmitting apparatus 1 according to this exemplary embodiment selects the switch 2 or 3 used for data transmission according to the type of physical lines in the interface circuits 5-1 to 5-n, it is possible to add the type of physical lines without a large change in the hardware structure of a circuit.

### (Second exemplary embodiment)

Next, a second exemplary embodiment of the invention will be described.

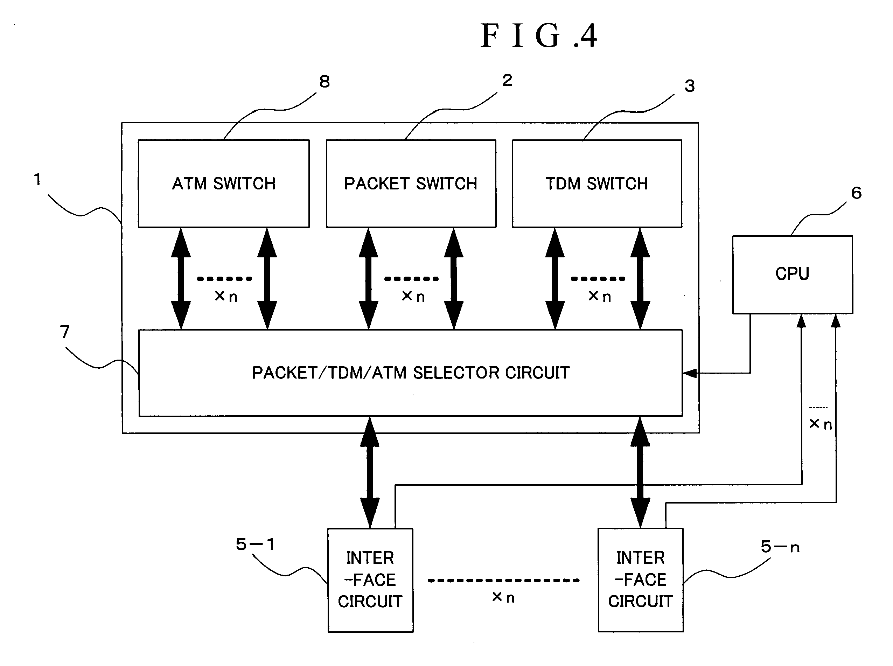

As shown in Fig. 4, a data transmitting apparatus 1 according to the second exemplary embodiment is characterized in that the data transmitting apparatus 1 switches a packet switch 2, a TDM switch 3, and an ATM (asynchronous transfer mode) switch 8, according to the type of physical lines in the interface circuits 5-1 to 5-n.

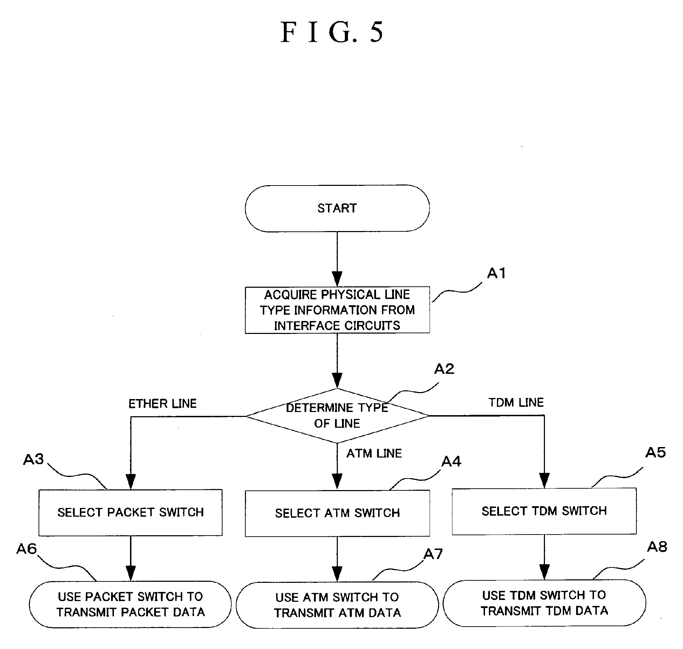

In this way, the data transmitting apparatus 1 according to this exemplary embodiment can effectively transmit packet traffic data, TDM traffic data, and ATM traffic data. Hereinafter, the data transmitting apparatus 1 according to the second exemplary embodiment will be described with reference to Figs. 4 and 5.

As shown in Fig. 4, the data transmitting apparatus 1 according to this exemplary embodiment includes the packet switch 2, the TDM switch 3, the ATM switch 8, and a packet/TDM/ATM selector circuit 7.

As such, the data transmitting apparatus 1 according to this exemplary embodiment further includes the ATM switch 8, as compared to the first exemplary embodiment.

The ATM switch 8 is for transmitting ATM data. In addition, the ATM switch 8 according to this exemplary embodiment is connected to the packet/TDM/ATM selector circuit 7.

The packet/TDM/ATM selector circuit 7 performs switching among the packet switch 2, the TDM switch 3, and the ATM switch 8 in response to instructions from the CPU 6.

The packet/TDM/ATM selector circuit 7 includes a function of transmitting ATM data input from the interface circuits 5-1 to 5-n to the ATM switch 8 without any change or transmitting ATM data received from the ATM switch 8 to the interface circuits 5-1 to 5-n without any change, in addition to the functions of the packet/TDM selector circuit 4 according to the first exemplary embodiment.

In addition, the interface circuits 5-1 to 5-n according to this exemplary embodiment store physical line type information for specifying the type of physical lines, such as an Ether line, a TDM line, and an ATM line.

### <Processing operation>

Next, the processing operation of the data transmitting apparatus 1 according to this exemplary embodiment will be described with reference to Fig. 5.

First, the CPU 6 acquires physical line type information from the interface circuits 5-1 to 5-n (Step A1), and determines the type of lines in the interface circuits 5-1 to 5-n on the basis of the acquired physical line type information (Step A2).

If it is determined that the physical line type information indicates an Ether line, the CPU 6 sets the packet/TDM/ATM selector circuit 7 such that the packet/TDM/ATM selector circuit 7 is connected to the packet switch 2 (Step A3).

In this way, when packet data is input from the interface circuits 5-1 to 5-n, the packet/TDM/ATM selector circuit 7 transmits the packet data to the packet switch 2 without any change (Step A6).

If it is determined that the physical line type information indicates an ATM line, the CPU 6 sets the packet/TDM/ATM selector circuit 7 such that the packet/TDM/ATM selector circuit 7 is connected to the ATM switch 8 (Step A4).

In this way, when ATM data is input from the interface circuits 5-1 to 5-n, the packet/TDM/ATM selector circuit 7 transmits the ATM data to the ATM switch 8 without any change (Step A7).

If it is determined that the physical line type information indicates a TDM line, the CPU 6 sets the packet/TDM/ATM selector circuit 7 such that the packet/TDM/ATM selector circuit 7 is connected to the TDM switch 3 (Step A5).

In this way, when TDM data is input from the interface circuits 5-1 to 5-n, the packet/TDM/ATM selector circuit 7 transmits the TDM data to the TDM switch 3 without any change (Step A8).

The process shown in Fig. 5 is performed in the units of physical lines.

As described above, the data transmitting apparatus 1 according to this exemplary embodiment includes a plurality of switches 2, 3, and 8, that is, the packet switch 2, the TDM switch 3, and the ATM switch 8 that perform different data transmission processes. In addition, the data transmitting apparatus 1 is connected to the interface circuits 5-1 to 5-n including physical lines accommodated therein.

The data transmitting apparatus 1 according to this exemplary embodiment selects one of the switches 2, 3, and 8 used for data transmission according to the type of physical lines in the interface circuits 5-1 to 5-n. Then the data transmitting apparatus 1 transmits data input from the interface circuits 5-1 to 5-n to any one of the switches 2, 3, and 8 without any change, and outputs data transmitted from any one of the switches 2, 3, and 8 to the interface circuits 5-1 to 5-n without any change.

In addition to the functions of the first exemplary embodiment, the data transmitting apparatus 1 according to this exemplary embodiment includes a function of selecting the ATM switch 8 to transmit data when the type of physical lines is the ATM line. Then the data transmitting apparatus 1 transmits ATM data input from the interface circuits 5-1 to 5-n to the ATM switch 8 without any change, and outputs ATM data transmitted from the ATM switch 8 to the interface circuits 5-1 to 5-n without any change.

In this way, the data transmitting apparatus 1 according to this exemplary embodiment can effectively transmit packet traffic data, TDM traffic data, and ATM traffic data.

Card (package) type interface circuits may be used as the interface circuits 5-1 to 5-n according to the above-described exemplary embodiments, and switching between the selector circuits 4 and 7 may be performed between the cards (packages).

Further, the control operation of the data transmitting apparatus 1 or the CPU 6 according to the above-described exemplary embodiments may be executed by software, hardware, or a combination thereof.

When the control operation is executed by software, a program having a processing sequence recorded therein may be installed in a memory of a computer having a dedicated hardware component incorporated therein, and then executed, or the program may be installed in a general-purpose computer that can execute various processes and then executed.

For example, the program may be stored in a hard disk or a ROM (read only memory), which is a recording medium, beforehand. Alternatively, the program may be temporarily or permanently stored (recorded) in a removable recording medium, such as a floppy disk, a CD-ROM (compact disk read only memory), an MO (magneto-optical) disk, a DVD (digital versatile disc), a magnetic disk, or a semiconductor memory. These removable recording media may be provided as so-called package software.

In addition to the method of installing the program in the computer from the removable recording medium, the program may be wirelessly transmitted from a download site to the computer, or it may be transmitted to the computer through a network, such as a LAN (local area network) or the Internet, by wire. Then, the computer may receive the transmitted program and install the program in a recording medium provided therein, such as a hard disk.

Further, the processes may be performed in a time series according to the processing operations described in the above-mentioned exemplary embodiments. In addition, the processes may be performed in parallel or individually according to the capability of an apparatus to perform the processes or if necessary.

The data transmitting apparatus 1 according to the above-described exemplary embodiments may be configured by logically combining a plurality of devices or by providing the devices in the same housing.

The invention can be applied to integrate the existing network into another network while maintaining the function of the existing network.

Although the exemplary embodiments of the invention have been described above, the invention is not limited thereto, and various modifications and changes of the invention can be made without departing from the scope and spirit of the invention.

An example 1 describes a data transmitting apparatus comprising: a plurality of switches that perform different data transmission processes; and a switching unit, wherein the data transmitting apparatus uses the switches to transmit data and is connected to interfaces including physical lines accommodated therein, and the switching unit switches any one of the switches used for data transmission according to the type of physical lines in the interfaces.

An example 2 describes a data transmitting apparatus comprising: a plurality of switches that perform different data transmission processes; and a switching unit, wherein the data transmitting apparatus uses the switches to transmit data and is connected to interfaces including physical lines accommodated therein, and the switching unit switches any one of the switches used for data transmission in the units of physical lines.

An example 3 describes the data transmitting apparatus according to example 1 or 2, further comprising: a control unit that acquires the type of physical lines in the interfaces and specifies the acquired type of physical lines, wherein the switching unit switches any one of the switches according to the type of physical lines specified by the control unit.

An example 4 describes the data transmitting apparatus according to any one of examples 1 to 3, wherein the switching unit transmits data input from the interfaces to any one of the switches without any change, and outputs data transmitted from any one of the switches to the interfaces without any change.

An example 5 describes the data transmitting apparatus according to any one of examples 1 to 4, wherein the switches include at least two of a packet switch that transmits packet data, a TDM switch that transmits TDM data, and an ATM switch that transmits ATM data.

An example 6 describes the data transmitting apparatus according to example 5, wherein, when the type of physical line is an Ether line, the switching unit switches any one of the switches used for data transmission to the packet switch, when the type of physical line is a TDM line, the switching unit switches any one of the switches used for data transmission to the TDM switch, and when the type of physical line is an ATM line, the switching unit switches any one of the switches used for data transmission to the ATM switch.

An example 7 describes the data transmitting apparatus according to any one of examples 1 to 6, wherein the interfaces are card-type interfaces.

An example 8 describes a data transmitting method that is performed by a data transmitting apparatus using a plurality of switches that perform different data transmission processes to transmit data, the data transmitting apparatus being connected to interfaces including physical lines accommodated therein, the method comprising: allowing the data transmitting apparatus to switch any one of the switches used for data transmission according to the type of physical lines in the interfaces.

An example 9 describes a data transmitting method that is performed by a data transmitting apparatus using a plurality of switches that perform different data transmission processes to transmit data, the data transmitting apparatus being connected to interfaces including physical lines accommodated therein, the method comprising: allowing the data transmitting apparatus to switch any one of the switches used for data transmission in the units of physical lines.

An example 10 describes the data transmitting method according to example 8 or 9, further comprising: allowing the data transmitting apparatus to acquire the type of physical lines in the interfaces and specify the acquired type of physical lines, wherein, in the switching any one of the switches used for data transmission, the switches are switched according to the specified type of physical lines.

An example 11 describes a recording medium comprising a data transmission program that allows a data transmitting apparatus using a plurality of switches that perform different data transmission processes to transmit data, the data transmitting apparatus being connected to interfaces including physical lines accommodated therein, to execute a process of: switching any one of the switches used for data transmission according to the type of physical lines in the interfaces.

An example 12 describes a recording medium comprising a data transmission program that allows a data transmitting apparatus using a plurality of switches that perform different data transmission processes to transmit data, the data transmitting apparatus being connected to interfaces including physical lines accommodated therein, to execute a process of: switching any one of the switches used for data transmission in the units of physical lines.

An example 13 describes the recording medium comprising a data transmission program according to example 11 or 12, wherein the data transmission program allows the data transmitting apparatus to further execute a control process of acquiring the type of physical lines in the interfaces and specifying the acquired type of physical lines, and any one of the switches used for data transmission is switched according to the type of physical lines specified by the control process.

## Claims

1. A data transmitting apparatus comprising:
a plurality of switches that perform different data transmission processes; and
a switching unit,
wherein the data transmitting apparatus uses the switches to transmit data and is connected to interfaces including physical lines accommodated therein, and
the switching unit switches any one of the switches used for data transmission according to the type of physical lines in the interfaces.

2. A data transmitting apparatus comprising:
a plurality of switches that perform different data transmission processes; and
a switching unit,
wherein the data transmitting apparatus uses the switches to transmit data and is connected to interfaces including physical lines accommodated therein, and
the switching unit switches any one of the switches used for data transmission in the units of physical lines.

3. The data transmitting apparatus according to claim 1 or 2, further comprising:
a control unit that acquires the type of physical lines in the interfaces and specifies the acquired type of physical lines,
wherein the switching unit switches any one of the switches according to the type of physical lines specified by the control unit.

4. The data transmitting apparatus according to any one of claims 1 to 3,
wherein the switching unit transmits data input from the interfaces to any one of the switches without any change, and outputs data transmitted from any one of the switches to the interfaces without any change.

5. The data transmitting apparatus according to any one of claims 1 to 4,
wherein the switches include at least two of a packet switch that transmits packet data, a TDM switch that transmits TDM data, and an ATM switch that transmits ATM data.

6. The data transmitting apparatus according to claim 5,
wherein, when the type of physical line is an Ether line, the switching unit switches any one of the switches used for data transmission to the packet switch,
when the type of physical line is a TDM line, the switching unit switches any one of the switches used for data transmission to the TDM switch, and
when the type of physical line is an ATM line, the switching unit switches any one of the switches used for data transmission to the ATM switch.

7. The data transmitting apparatus according to any one of claims 1 to 6,
wherein the interfaces are card-type interfaces.

8. A data transmitting method that is performed by a data transmitting apparatus using a plurality of switches that perform different data transmission processes to transmit data, the data transmitting apparatus being connected to interfaces including physical lines accommodated therein, the method comprising:
allowing the data transmitting apparatus to switch any one of the switches used for data transmission according to the type of physical lines in the interfaces.

9. A data transmitting method that is performed by a data transmitting apparatus using a plurality of switches that perform different data transmission processes to transmit data, the data transmitting apparatus being connected to interfaces including physical lines accommodated therein, the method comprising:
allowing the data transmitting apparatus to switch any one of the switches used for data transmission in the units of physical lines.

10. The data transmitting method according to claim 8 or 9, further comprising:
allowing the data transmitting apparatus to acquire the type of physical lines in the interfaces and specify the acquired type of physical lines,
wherein, in the switching any one of the switches used for data transmission, the switches are switched according to the specified type of physical lines.

11. A recording medium comprising a data transmission program that allows a data transmitting apparatus using a plurality of switches that perform different data transmission processes to transmit data, the data transmitting apparatus being connected to interfaces including physical lines accommodated therein, to execute a process of:
switching any one of the switches used for data transmission according to the type of physical lines in the interfaces.

12. A recording medium comprising a data transmission program that allows a data transmitting apparatus using a plurality of switches that perform different data transmission processes to transmit data, the data transmitting apparatus being connected to interfaces including physical lines accommodated therein, to execute a process of:
switching any one of the switches used for data transmission in the units of physical lines.

13. The recording medium comprising a data transmission program according to claim 11 or 12,
wherein the data transmission program allows the data transmitting apparatus to further execute a control process of acquiring the type of physical lines in the interfaces and specifying the acquired type of physical lines, and
any one of the switches used for data transmission is switched according to the type of physical lines specified by the control process.
